# EUROPÄISCHE PATENTANMELDUNG

(11) **EP 2 047 969 A2**
(43) Veröffentlichungstag der Anmeldung: **15.04.2009**
(21) Anmeldenummer: 08017757.9
(22) Anmeldetag: 09.10.2008
(51) Int. Cl.: B29C 65/16

(54) **Verfahren und Vorrichtung zum Schweißen von mindestens zwei Lagen eines polymeren Materials mit Laserstrahlung**

(30) Priorität: 09.10.2007 DE 102007049362
(71) Anmelder: Fraunhofer-Gesellschaft zur Förderung der angewandten Forschung e.V., 80686 München (DE)
(72) Erfinder: Klotzbach, Annett, 01326 Dresden (DE); Fleischer, Veiko, 09599 Freiberg (DE); Schwarz, Thomas, 01728 Bannewitz (DE); Morgenthal, Lothar, 01187 Dresden (DE)
(74) Vertreter: Pfenning, Meinig & Partner GbR

(57) **Zusammenfassung**

Die Erfindung betrifft ein Verfahren und eine Vorrichtung zum Schweißen von mindestens zwei Lagen eines polymeren Materials mit Laserstrahlung, wobei die mindestens zwei Lagen aus dem gleichen polymeren Material gebildet sein können und das polymere Material in gefalteter Form in Lagenform vorliegt. Beim erfindungsgemäßen Verfahren wird ein auslenkbarer Laserstrahl auf ein mit mindestens zwei Lagen ausgebildetes und in einer Vorschubbewegungsachsrichtung bewegtes polymeres Material von einer Seite gerichtet. Dabei wird der Laserstrahl entlang einer vorgegebenen Schweißnahtkontur zwischen zwei Umkehrpunkten hin und her bewegt, so dass der auszubildende Schweißnahtbereich vom Laserstrahl mehrfach überstrichen wird, bis ein zum Verschweißen der Lagen des polymeren Materials führendes Schmelzen des polymeren Materials im Bereich der Schweißnaht erreicht worden ist. Die miteinander zu verschweißenden Lagen des polymeren Materials werden dabei mit einer Druckkraft beaufschlagt, um die Lagen zusammen zu pressen

## Beschreibung

Die Erfindung betrifft ein Verfahren und eine Vorrichtung zum Schweißen von mindestens zwei Lagen eines polymeren Materials mit Laserstrahlung, wobei die mindestens zwei Lagen aus dem gleichen polymeren Material gebildet sein können und das polymere Material in gefalteter Form in Lagenform vorliegt. Die erfindungsgemäße technische Lösung kann insbesondere vorteilhaft für die Herstellung von Airbag-Schutzhüllen eingesetzt werden.

Üblicherweise wird das hierfür eingesetzte polymere Material von einer Rolle abgewickelt, und vor dem Schweißen kann es beispielsweise durch Laserschneiden mit notwendigen Innenkonturen versehen werden. Im Anschluss daran kann das polymere Material in der Mitte gefalzt werden, so dass eine äußere Randkontur vorgebende Längskanten des so gefalteten polymeren Materials miteinander verschweißt werden können.

Für die ökonomische Verschweißung solcher polymeren Materialien sind hohe Bearbeitungsgeschwindigkeiten erforderlich.

Aus diesem Grund scheidet die Ausbildung der Schweißnähte durch Ultraschall oder auch widerstandsbeheizte Heizleisten aus. Bei der Herstellung einer solchen Verbindung durch Nähen kann nur eine sehr geringe Bearbeitungsgeschwindigkeit erreicht und eine nicht unbedingt konstante reproduzierbare Festigkeit der Verbindung eingehalten werden.

Beim Einsatz von Laserstrahlung wird bisher so vorgegangen, dass Laserstrahlen von zwei gegenüberliegenden Seiten auf die Lagen des polymeren Materials gerichtet werden, um eine möglichst gleichmäßige Schweißnahtausbildung und die Vermeidung der Zerstörung oder Beschädigung des polymeren Materials erreichen zu können. Dabei liegt es auf der Hand, dass in dieser Form der erforderliche Bauraum entsprechend geeigneter Anlagentechnik sehr groß ist und auch erhöhte Kosten in Kauf genommen werden müssen.

Bei der Ausbildung solcher Schweißnähte, insbesondere für Airbag-Schutzhüllen, müssen die entsprechenden Schutzhüllen reproduzierbar hergestellt werden, so dass sie eine definierte Aufreißcharakteristik einhalten können.

Es ist dabei Aufgabe der Erfindung, Möglichkeiten vorzuschlagen, mit denen ein mindestens zweilagiges polymeres Material mit Laserstrahlung verschweißt werden kann und dies reproduzierbar mit konstanter Schweißnahtqualität und hoher Bearbeitungsgeschwindigkeit erreichbar ist.

Erfindungsgemäß wird die Aufgabe mit einem Verfahren, das die Merkmale des Anspruchs 1 aufweist, gelöst. Eine hierfür geeignete Vorrichtung ist mit dem Anspruch 14 definiert.

Vorteilhafte Ausgestaltungsformen und Weiterbildungen der Erfindung können mit in untergeordneten Ansprüchen bezeichneten Merkmalen erreicht werden.

Bei dem erfindungsgemäßen Verfahren wird so vorgegangen, dass die mindestens zwei Lagen des polymeren Materials in einer Vorschubbewegung entlang einer Achse bewegt werden und dabei lediglich von einer Seite auf das polymere Material ein auslenkbarer Laserstrahl gerichtet wird. Der Laserstrahl wird dabei entlang einer vorgegebenen Schweißnahtkontur zwischen zwei Umkehrpunkten hin- und herbewegt, so dass der auszubildende Schweißnahtbereicht vom Laserstrahl mehrfach überstrichen wird. Dies wird so durchgeführt, bis ein zum Verschweißen der Lagen führendes Schmelzen des polymeren Materials im Bereich der Schweißnaht erreicht worden ist. Demzufolge erfolgt die Wärmezufuhr durch Absorption der Laserstrahlung sukzessive bei dem mehrfachen Überstreichen der Oberfläche des polymeren Materials, bis das polymere Material der Lagen in ausreichendem Maß geschmolzen ist. Gleichzeitig werden die miteinander zu verschweißenden Lagen des polymeren Materials mit einer Druckkraft beaufschlagt, so dass die Lagen dadurch zusammengepresst werden. Dies kann auf unterschiedliche Art und Weise erreicht werden, wobei auch Kombinationen davon möglich sind, und es wird nachfolgend noch darauf zurückzukommen sein, welche Möglichkeiten hierfür besonders geeignet sind.

Bei der Ausbildung der Schweißnähte wird der Laserstrahl ausgelenkt, wobei eine zweidimensionale Auslenkung besonders vorteilhaft ist. Durch die Auslenkung kann eine überlagerte Relativbewegung durch die Auslenkung von Laserstrahl und die Vorschubbewegung des polymeren Materials erreicht werden.

Bevorzugt ist es, den Laserstrahl gepulst zu betreiben, um auch dadurch Einfluss auf die Ausbildung von Schweißnähten nehmen zu können.

Mit dem erfindungsgemäßen Verfahren können durchgängig ausgebildete Schweißnähte, aber auch zumindest bereichsweise unterbrochene Schweißnähte hergestellt werden. Unterbrochene Schweißnähte können dabei mit einzelnen in Abständen angeordneten Schweißpunkten ausgebildet werden. Es ist auch eine strichförmige Schweißnahtausbildung möglich, wobei wiederum Kombinationen solcher unterbrochenen Schweißnahtausbildungen möglich sind.

Das bereits angesprochene Zusammenpressen der miteinander zu verschweißenden Lagen des polymeren Materials kann in relativ einfacher Form dadurch erreicht werden, dass das polymere Material in gefalteter Form über eine konvex gekrümmte Oberfläche bei der Vorschubbewegung geführt wird. Die jeweilige Oberfläche sollte möglichst glatt sein, um den Reibungswiderstand gering halten zu können, und es sollte auch ein möglichst großer Radius für die Krümmung der Oberfläche gewählt werden.

Eine solche konvex gekrümmte Oberfläche kann dabei so angeordnet sein, dass sie vor, im oder auch nach dem Bereich angeordnet ist, in dem der Laserstrahl auf das polymere Material auftrifft.

Eine zweite Möglichkeit, mit der ein Zusammenpressen der miteinander zu verschweißenden Lagen möglich ist, besteht darin, dass das vorab mit Laserstrahlung beaufschlagte polymere Material durch mindestens ein Walzenpaar geführt wird, mit dem entsprechende Druckkräfte ausgeübt werden können. Dies sollte in einem Zustand durchgeführt werden, bei dem das durch die Laserstrahlung geschmolzene polymere Material noch eine Temperatur aufweist, bei der es zumindest noch plastisch verformt werden kann.

Die Oberflächen eines oder mehrerer Walzenpaare bzw. auch einer konvex gekrümmten Oberfläche können mit einer Antihaftbeschichtung, die aus PTFE gebildet werden kann, versehen sein, um ein Anhaften von noch geschmolzenem Material zu verhindern bzw. eine solche Anhaftung deutlich reduzieren zu können. Mit Hilfe einer solchen Beschichtung können aber auch Anhaftungen relativ einfach und leicht von einer Oberfläche wieder entfernt werden, die sich nachfolgend weiter aufbauen können und die Qualität von Schweißnähten stark negativ beeinflussen würden.

Eine bei der Erfindung einsetzbare Vorrichtung kann dabei so ausgebildet sein, dass zumindest eine Walze eines Walzenpaares einen sehr großen Radius aufweist, so dass ein Bereich der Oberfläche einer solchen Walze, wie bereits erwähnt, als konvex gekrümmte Oberfläche ausgenutzt werden kann. Eine zweite Walze, die zum Zusammenpressen der miteinander verschweißten Lagen des polymeren Materials eingesetzt werden kann, kann dann einen deutlich kleineren Radius aufweisen.

Der Schutz für Anhaftungen auf einer konvex gekrümmten Oberfläche und auch von Walzenoberflächen kann durch den zusätzlichen Einsatz einer Trennfolie verbessert werden. Eine Trennfolie kann an mindestens einer Oberfläche des vorab mit dem Laserstrahl verschweißten polymeren Materials gemeinsam mit diesem durch ein Walzenpaar geführt werden, so dass die Walzenoberfläche sicher vor Anhaftungen geschützt werden kann. Trennfolien können beispielsweise aus einem polymeren Material, aber auch in Form von beschichtetem Papier ausgebildet sein.

Besonders günstig ist es, eine Trennfolie in Form eines Endlosbandes einzusetzen, das dann um zumindest eine Walze eines Walzenpaares in geschlungener Form geführt ist. In einer solchen Ausführungsform besteht dann die Möglichkeit, eine solche Trennfolie nach dem Durchlaufen des Walzenspaltes zu reinigen und dadurch gegebenenfalls Anhaftungen von der Trennfolienoberfläche wieder entfernen zu können, bevor dieser Bereich einer Trennfolie wieder durch den Walzenspalt eines Walzenpaares hindurchgeführt wird.

Dabei ergibt sich die Möglichkeit, gleichzeitig Trennfolien an beiden Seiten des miteinander verschweißten polymeren Materials durch den Walzenspalt gemeinsam mit dem polymeren Material hindurchzuführen und so einen Schutz der Oberflächen der beiden Walzen eines Walzenpaares erreichen zu können.

Mit der erfindungsgemäßen Lösung können polymere Materialien, die thermoplastische Eigenschaften aufweisen, wie z.B. PP, PE oder HDPE eingesetzt werden.

Bei der Vorschubbewegung des polymeren Materials sollte eine Mindestvorschubgeschwindigkeit von 30 m/min bis 50 m/min eingehalten sein. Es kann aber auch bei bis zu 100 m/min gearbeitet werden. Bei der oszillierenden Bewegung des Laserstrahlbrennflecks sollte eine Auslenkgeschwindigkeit von mindestens 10 m/s, bevorzugt von 20 m/s eingehalten werden, so dass ein miteinander zu verschweißender Bereich des polymeren Materials mindestens fünffach vom Laserstrahl überstrichen wird. Bei der oszillierenden Auslenkung des Laserstrahls kann ein Brennfleck zwischen den jeweiligen Umkehrpunkten einen Weg von jeweils mindestens 80 mm bis zu 200 mm zurücklegen. Dabei ist der entsprechend zurückgelegte Weg der Auslenkung von der Vorschubbewegung des polymeren Materials überlagert.

Bei der Ausbildung der Schweißnähte kann eine Modulation der Pulslänge bzw. -breite, wie auch eine Modulation der Leistung des Laserstrahles allein oder auch in Kombination miteinander vorgenommen werden.

Für die erfindungsgemäße Auslenkung eines Laserstrahles können an sich bekannte schwenkbare reflektierende Elemente, die üblicherweise als Scanner bezeichnet werden, eingesetzt werden.

Für die in Rede stehenden miteinander zu verschweißenden polymeren Materialien kann vorteilhaft ein CO₂-Laser eingesetzt werden, da die polymeren Materialien diese Laserstrahlung gut absorbieren. Es besteht aber auch die Möglichkeit andere Laser, z.B. Festkörperlaser einzusetzen. Dabei kann es erforderlich sein, eine Mindestabsorption für die jeweilige Laserstrahlungswellenlänge aufweisende Zusatzstoffe einzusetzen.

Mit der Erfindung können reproduzierbar Schweißnähte an mehrlagigen polymeren Materialien hergestellt werden, wobei bei Airbag-Schutzhüllen auch ein reproduzierbares Aufreißverhalten erreichbar ist. Es kann eine definierte Festigkeit einzelner Schweißpunkte bzw. Schweißnahtbereiche und dadurch ein vorgegebenes ebenfalls reproduzierbares Aufreißverhalten eingehalten werden.

Die Schweißnähte können in unterschiedlichen Schweißnahtkonturen und -verläufen (auch als konische Schläuche) durch freie Programmierbarkeit der Auslenkung des Laserstrahls ausgebildet werden. Es besteht auch die Möglichkeit Schweißnähte in senkrecht zur Vorschubachsrichtung bei der Durchführung des Verfahrens verlaufender Richtung auszubilden, um beispielsweise Airbag-Schutzhüllen an einer Seite zu schließen.

Gegenüber herkömmlichen technischen Lösungen können sowohl die Herstellungskosten, wie auch die Kosten für die erforderliche Anlagentechnik reduziert werden. Letzteres trifft ebenfalls auf die Ausschussquote zu.

Dadurch, dass das mit mehreren Lagen gefaltete polymere Material über eine konvex gekrümmte Oberfläche geführt werden kann, resultiert durch die auftretende Bahnspannung eine großflächige Normalkraft, mit der aufgeschmolzene Bereiche des polymeren Materials in den Lagen berührungslos aufeinandergepresst werden können. Durch eine Bewegung des polymeren Materials auf einer konvex gekrümmten Oberfläche mit relativ großem Radius ohne Umlenkungen können Relativbewegungen der Lagen innerhalb der Schweißnähte vermieden werden. Solche Relativbewegungen würden während der Erstarrung des vorab geschmolzenen polymeren Materials bei den zusammengepressten Lagen des polymeren Materials zu undefinierten Schweißnahtfestigkeiten führen.

Nachfolgend soll die Erfindung beispielhaft näher erläutert werden.

Bei der Herstellung von Schweißnähten an zwei Lagen eines als Fließ ausgebildeten Polypropylen-Materials mit 80 g Masse pro m², das schwarz eingefärbt war, ist mit einer Vorschubgeschwindigkeit von 50 m/min gearbeitet worden. Der CO₂-Laser wurde mit einer Leistung von 400 W, bei einer Pulslänge von 5mm und einer Pulsperiodendauer von 10mm betrieben. Die zwei Lagen wurden unter Einsatz eines konvexen Bleches mit einer Andruckrolle miteinander von einer Seite durch den Laser verschweißt.

## Patentansprüche

1. Verfahren zum Schweißen von mindestens zwei Lagen eines polymeren Materials mit Laserstrahlung, bei dem ein auslenkbarer Laserstrahl auf ein mit mindestens zwei Lagen ausgebildetes und in einer Vorschubbewegungsachsrichtung bewegtes polymeres Material von einer Seite gerichtet wird;
dabei der Laserstrahl entlang einer vorgegebenen Schweißnahtkontur zwischen zwei Umkehrpunkten
hin und her bewegt wird, so dass der auszubildende Schweißnahtbereich vom Laserstrahl mehrfach überstrichen wird, bis ein zum Verschweißen der Lagen des polymeren Materials führendes Schmelzen des polymeren Materials im Bereich der Schweißnaht erreicht worden ist, wobei die miteinander zu verschweißenden Lagen des polymeren Materials mit einer Druckkraft beaufschlagt werden, um die Lagen zusammen zu pressen.

2. Verfahren nach Anspruch 1, **dadurch gekennzeichnet, dass** mit dem polymeren Material Airbag-Schutzhüllen hergestellt werden.

3. Verfahren nach Anspruch 1 oder 2, **dadurch gekennzeichnet, dass** der Laserstrahl gepulst auf das polymere Material gerichtet wird.

4. Verfahren nach einem der vorhergehenden Ansprüche, **dadurch gekennzeichnet, dass** zumindest bereichsweise eine unterbrochene Schweißnaht mit Schweißpunkten und/oder eine strichförmige Schweißnaht ausgebildet wird.

5. Verfahren nach einem der vorhergehenden Ansprüche, **dadurch gekennzeichnet, dass** das polymere Material über eine konvex gekrümmte Oberfläche bei der Vorschubbewegung geführt wird.

6. Verfahren nach einem der vorhergehenden Ansprüche, **dadurch gekennzeichnet, dass** die miteinander zu verschweißenden Lagen des polymeren Materials durch mindestens ein Walzenpaar im Anschluss an die Beaufschlagung durch die Laserstrahlung geführt wird; wobei das geschmolzene polymere Material dabei noch eine Temperatur aufweist, bei der es zumindest noch plastisch verformbar ist.

7. Verfahren nach einem der vorhergehenden Ansprüche, **dadurch gekennzeichnet, dass** der Laserstrahl mit einer Mindestgeschwindigkeit von 10 m/s bei der oszillierenden Bewegung zwischen Umkehrpunkten ausgelenkt wird.

8. Verfahren nach einem der vorhergehenden Ansprüche, **dadurch gekennzeichnet, dass** das miteinander verschweißte polymere Material gemeinsam mit einer unter- und/oder oberhalb des polymeren Materials angeordneten Trennfolie durch das mindestens eine Walzenpaar geführt wird.

9. Verfahren nach Anspruch 8, **dadurch gekennzeichnet, dass** die Trennfolie als Endlosband ausgebildet ist und nach durchlaufen des/der Walzenpaare(s) die Oberfläche, die mit dem polymeren Material in Kontakt gestanden hat, gereinigt wird.

10. Verfahren nach einem der vorhergehenden Ansprüche, **dadurch gekennzeichnet, dass** ein polymeres Material, das ausgewählt ist, aus PP, PE und HDPE eingesetzt wird.

11. Verfahren nach einem der vorhergehenden Ansprüche, **dadurch gekennzeichnet, dass** die Pulslänge und/oder die Leistung des Laserstrahles moduliert wird.

12. Vorrichtung zur Durchführung des Verfahrens nach einem der Ansprüche 1 bis 11, **dadurch gekennzeichnet, dass** ein mit mindestens zwei übereinander liegenden Lagen ausgebildetes polymeres Material mittels einer Einrichtung entlang einer Vorschubbewegungsachse bewegbar ist, dabei ein in mindestens einer Achse oszillierend auslenkbarer Laserstrahl auf eine Oberfläche des polymeren Materials gerichtet ist und das polymere Material über eine konvex gekrümmte Oberfläche geführt ist.

13. Vorrichtung nach Anspruch 12, **dadurch gekennzeichnet, dass** miteinander verschweißtes polymeres Material durch mindestens ein Walzenpaar geführt ist.

14. Vorrichtung nach einem der Ansprüche 12 oder 13, **dadurch gekennzeichnet, dass** mindestens eine Trennfolie mit dem polymeren Material durch das/die Walzenpaar(e) geführt ist.

15. Vorrichtung nach Anspruch 14, **dadurch gekennzeichnet, dass** die Trennfolie in Form eines Endlosbandes ausgebildet ist.
